# EUROPÄISCHE PATENTSCHRIFT

(11) **EP 2 685 130 B1**
(45) Veröffentlichungstag und Bekanntmachung des Hinweises auf die Patenterteilung: **12.08.2015**
(21) Anmeldenummer: 13174194.4
(22) Anmeldetag: 28.06.2013
(51) Int. Cl.: F16H 3/00

(54) **Getriebeanordnung**
Gearbox assembly
Agencement d'engrenage

(30) Priorität: 10.07.2012 DE 102012212032
(43) Veröffentlichungstag der Anmeldung: 15.01.2014
(73) Patentinhaber: Metabowerke GmbH, 72622 Nürtingen (DE)
(72) Erfinder: Fade, German, 72660 Beuren (DE); Schulze, Jan, 73730 Esslingen a. N. (DE)
(74) Vertreter: Markfort, Iris-Anne Lucie

(56) Entgegenhaltungen:
- EP-A1- 2 361 826
- DE-A1- 3 529 992
- GB-A- 2 109 489

## Beschreibung

Die vorliegende Erfindung betrifft eine Getriebeanordnung zur Übertragung einer Drehbewegung von einem Antrieb auf einen Abtrieb, insbesondere für eine angetriebene Handwerkzeugmaschine, wobei die Getriebeanordnung eine antreibende Welle an einem Getriebeeingang umfasst, eine angetriebene Welle an einem Getriebeausgang und ein Übersetzungsgetriebe zur Übersetzung einer Eingangsdrehzahl der antreibenden Welle in eine Ausgangsdrehzahl der angetriebenen Welle.

Aus dem Stand der Technik bekannte Übersetzungsgetriebe können beispielsweise in der Art eines Stirnradgetriebes, Kegelradgetriebes oder Planetengetriebes ausgebildet sein. Wenn Übersetzungsgetriebe mehrere schaltbare Gangstufen, d.h. mehrere unterschiedliche Übersetzungen, bereitstellen sollen (Schaltgetriebe), sind diese regelmäßig mit einem separaten mechanischen Schaltelement, beispielsweise einer Schaltmuffe oder dergleichen, ausgestattet, die bewegbar in dem Übersetzungsgetriebe angeordnet ist. Je nach Stellung dieses Schaltelements wird eine Komponente des Übersetzungsgetriebes drehfest mit einer anderen verbunden oder freigeben, wodurch der Fluss des übertragenen Drehmoments und damit auch die Übersetzung durch das Übersetzungsgetriebe verändert werden kann.

Nachteilig bei solchen Übersetzungsgetrieben mit mechanischen Schaltelementen ist jedoch in der Praxis, dass diese einem vergleichsweise hohen Verschleiß unterliegen. Weiterhin ist es je nach Anwendungsfall des Schaltgetriebes auch notwendig zusätzliche Sicherungen vorzusehen, um eine Fehlbedingung des schaltbaren Übersetzungsgetriebes und damit einen möglichen Totalausfall des Übersetzungsgetriebes zu verhindern. So kann ein Umschalten zwischen einer ersten Drehrichtung und einer zweiten entgegengesetzten Drehrichtung bei hohen Drehzahlen zu einer Schädigung des Schaltelements oder sogar weiterer Getriebekomponenten führen. Gleiches gilt für einen Wechsel von einer sehr hohen Übersetzungsstufe auf eine sehr niedrige Übersetzungsstufe.

Die deutsche Gebrauchsmusterschrift DE 1 911 332 U1 beschreibt alternativ ein Getriebe mit zwei Übersetzungsstufen für in der Drehrichtung umsteuerbare Motoren. Das Getriebe umfasst eine Getriebeeingangswelle, Übertragungsräder und zwei Getriebeausgangswellen, die an umlaufenden Getriebeteilen befestigt sind, welche im Kraftfluss des Getriebes hintereinander liegen. Zwischen den Abtriebswellen und den daran befestigten Abtriebsorganen sind ferner Freilaufkupplungen angeordnet, deren Sperreinrichtung sich gegenüber den Drehrichtungen der beiden Abtriebswellen umgekehrt verhalten. Die Abtriebsorgane sind beispielsweise als Keilriemenscheiben ausgebildet, welche zum Antrieb von beliebigen Aggregaten, beispielsweise einer Haushaltsbügelmaschine, dienen, wobei die eine Keilriemenscheibe zum Antrieb der Trommel und die andere zum Antrieb des Schwenkarms dient.

Die Abtriebsorgane und die damit angetriebenen Aggregate sind somit jeweils einer festen Übersetzung durch das Planetengetriebe zugeordnet und werden je nach Drehrichtung der Antriebswelle des Motors angetrieben oder stehen still, abhängig von der Sperrrichtung des jeweiligen Freilaufs.

Die aus dem Stand der Technik bekannte Getriebeanordnung hat jedoch den Nachteil, dass es nicht möglich ist, damit nur ein einziges Aggregat mit unterschiedlichen Drehzahlen zu betreiben. Weiterhin baut diese Anordnung vergleichsweise groß, das heißt es muss ein aureichender Bauraum hierfür zur Verfügung gestellt werden. Gerade in Zusammenhang mit handgeführten, angetriebenen Werkzeugmaschinen, für die eine Übertragung und Übersetzung einer Drehbewegung von einer Antriebs- auf eine Abtriebswelle gewünscht sein kann, werden jedoch insbesondere kleinbauende Getriebeanordnungen benötigt, um eine einfache und sichere Handhabung der handgeführten Werkzeugmaschine sicherzustellen.

Weiterhin ist aus der deutschen Offenlegungsschrift DE 35 29 992 A1 ein Antrieb für Schrauber bekannt, der eine Getriebeanordnung mit zwei parallelen Antriebssträngen aufweist, von denen ein erster Antriebsstrang über einen ersten Freilauf mit der Antriebswelle eines in der Drehrichtung umschaltbaren Antriebsmotors verbunden und direkt mit dem Abtrieb verbunden ist, während der zweite Antriebsstrang über ein Planetengetriebe mit der Antriebswelle und über einen zweiten Freilauf mit dem Abtrieb verbunden ist. Die beiden Freiläufe sperren in entgegengesetzter Drehrichtung der Antriebswelle, wodurch deren Drehmoment entweder über den direkt verbundenen ersten antriebsstrang an den Abtrieb abgegeben wird oder über den ein Planetengetriebe aufweisenden zweiten Antriebsstrang.

Die Druckschrift EP 2 231 826 A1 offenbart ferner ein Fahrrad mit einer Getriebeanordnung mit drei Freiläufen, bei der antriebsseitig zwei unterschiedliche Drehrichtungen vorgegeben werden können und abtriebsseitig ein Antrieb mit der immer gleichen Drehrichtung abgegeben wird.

Die Druckschrift GB 2 109 489 A offenbart eine Getriebeanordnung gemäß dem Oberbegriff des Anspruchs 1.

Eine Aufgabe der vorliegenden Erfindung besteht darin, eine weiterentwickelte Getriebeanordnung anzubieten, die nur einen geringen Bauraum in Anspruch nimmt und dazu verwendet werden kann, ein einziges Aggregat mit wenigstens zwei unterschiedlichen Gangstufen zu betreiben. Diese Aufgabe wird mit Hilfe einer Getriebeanordnung gemäß einem ersten Apsekt der Erfindung oder mit Hilfe einer Getriebeanordnung gemäß einem zweiten Apsekt der Erfindung gelöst.

Erfindungsgemäß wird eine Getriebeanordnung zur Übertragung einer Drehbewegung von einem Antrieb auf einen Abtrieb mit den Merkmalen des Anspruchs 1 bzw. des Anspruchs 2 vorgeschlagen, die eine antreibende Welle an einem Getriebeeingang, eine angetriebene Welle an einem Getriebeausgang sowie ein Übersetzungsgetriebe zur Übersetzung einer Eingangsdrehzahl der antreibenden Welle in eine Ausgangsdrehzahl der angetriebenen Welle umfasst.

Das Übersetzungsgetriebe umfasst ein Planetengetriebe. Ein Planetengetriebe hat gegenüber anderen Getriebearten, wie beispielsweise einem Stirnradgetriebe oder einem Kegelradgetriebe, den Vorteil, dass dieses wiederrum eine besonders einfache und raumsparende Anordnung ermöglicht. Weiterhin wird bei Planetengetrieben die Zahnradbelastung herabgesetzt, dadurch dass anstelle eines einzigen Stirnrads oder Kegelrads mehrere Planetenräder zur Kraftübertragung benutzt werden. Somit ist es auch möglich, beispielsweise Kunststoffräder zu verwenden und damit die Geräuschentwicklung zu reduzieren. Ds erfindungsgemäß Planetengetriebe umfasst ferner ein Hohlrad, ein Sonnenrad, sowie einen Planetenradträger, an dem eine Anzahl von Planetenrädern angeordnet ist, die in Eingriff mit dem Sonnenrad und dem Hohlrad stehen.

Ferner sind zwei Freiläufe vorgesehen, deren Sperrrichtungen sich bezüglich den Drehrichtungen der antreibenden Welle umgekehrt zueinander verhalten. Dies bedeutet, dass ein erster Freilauf in einer ersten Drehrichtung der antreibenden Welle sperrt und in der hierzu entgegengesetzten zweiten Drehrichtung frei durchläuft, während der wenigstens zweite Freilauf in der ersten Drehrichtung der antreibenden Welle frei durchläuft und in der zweiten hierzu entgegengesetzten Drehrichtung der antreibenden Welle sperrt.

Die Getriebeanordnung ist ferner zumindest teilweise innerhalb eines Gehäuses aufgenommen und der zweite Freilauf ist zwischen dem Gehäuse und einer Komponente des Übersetzungsgetriebes angeordnet. Der zweite Freilauf dient folglich dazu, eine der Komponenten des Übersetzungsgetriebes in einer Drehrichtung der antreibenden Welle relativ zu dem Gehäuse drehfest zu halten.Somit wird ein Umschalten zwischen wenigstens zwei Übersetzungsstufen der Getriebeanordnung durch eine Drehrichtungsumkehr der Drehrichtung der antreibenden Welle erreicht. Diese kann beispielsweise mit Hilfe eines Antriebsmotors erreicht werden, der bezüglich seiner Antriebsdrehzahl umgesteuert werden kann, was beispielsweise bei einem Elektromotor durch Umpolen des Ankers oder des Feldmagneten erfolgen kann. Erfindungsgemäß ist der erste der wenigstens zwei Freiläufe zwischen der antreibenden Welle und der angetriebenen Welle der Getriebeanordnung angeordnet.

Mit Hilfe des ersten Freilaufs wird somit eine Direktkopplung der angetriebenen Welle mit der antreibenden Welle erreicht, was einem sogenannten direkten Antrieb bzw. Direktantrieb entspricht.

Gemäß dem ersten Aspekt der Erfindung ist der zweite Freilauf beispielsweise zwischen dem Hohlrad des Planetengetriebes (als Komponente des Übersetzungsgetriebes) und dem Gehäuse angeordnet während er gemäß dem zweiten Aspekt der Erfindung alternativ zwischen dem Planetenradträger des Planetengetriebes (als Komponente der Übersetzungsgetriebes) und dem Gehäuse angeordnet ist.

Bei der ersten Variante bildet das Sonnenrad beispielsweise die Eingangskomponenete des Übersetzungsgetriebes und überträgt ein Drehmoment auf die damit in Eingriff stehenden Planetenräder. Das Hohlrad, das zumindest in einer Drehrichtung der angetriebenen Welle durch den zweiten Freilauf drehfest zum Gehäuse gehalten wird, steht still und ermöglicht ein Abrollen der angetriebenen Planetenräder an seinem Innenumfang. Somit wird zusammen mit den Planetenrädern der Planetenradträger, an dem diese angeordnet sind, angetrieben und bildet den Abtrieb des Übersetzungsgetriebes auf die angetriebene Welle der Getriebeanordnung.

Die Ausgangsdrehrichtung an der angetriebenen Welle entspricht bei dieser Anordnung der Drehrichtung der Eingangsdrehbewegung an der antreibenden Welle.

Bei einer Drehrichtungsumkehr der Drehbewegung der antreibenden Welle wird der zweite Freilauf freigegeben, so dass sich das Hohlrad frei mit dem Sonnenrad und den Planetenrädern mitdrehen kann. Auf diese Weise erfolgt keine Übertragung des Drehmoments von der antreibenden Welle auf die abtreibende Welle über das Übersetzungsgetriebe. Stattdessen wird der erste Freilauf gesperrt und erzeugt eine direkte Kopplung der antreibenden Welle mit der angetriebenen Welle (Direktantrieb). Somit wird bei einer Drehrichtungsumkehr der antreibenden Welle auch eine Drehrichtungsumkehr an der angetriebenen Welle erreicht.

Im Unterschied dazu bleibt bei der zweiten Variante, bei der der zweite Freilauf zwischen dem Planetenradträger und dem Gehäuse angeordnet ist, die Richtung der angetriebenen Welle unabhängig von der Drehrichtung der antreibenden Welle immer gleich. Bei dieser Anordnung bildet ebenfalls beispielsweise das Sonnenrad des Planetengetriebes den Getriebeeingang des Übersetzungsgetriebes und überträgt wiederum sein Drehmoment auf die Planetenräder, welche in Eingriff mit dem Sonnenrad stehen. Der Planetenradträger des Planetengetriebes wird zumindest in einer Drehrichtung der angetriebenen Welle durch den zweiten Freilauf gesperrt, welcher den Planetenradträger drehfest an dem Gehäuse hält. Auf diese Weise wird durch die Drehbewegung der Planetenräder das Hohlrad des Planetengetriebes angetrieben, welches bei dieser Variante den Abtrieb des Übersetzungsgetriebes auf die angetriebene Welle bildet.

Die Drehrichtung des Hohlrads ist dabei entgegengesetzt zu der Drehrichtung des Sonnenrads, so dass die Drehrichtung der angetriebenen Welle ebenfalls umgekehrt zu der Drehrichtung der antreibenden Welle ist.

Wird die Drehrichtung der antreibenden Welle umgekehrt, so erfolgt wiederum die Übertragung des Drehmoments nicht mehr über das Übersetzungsgetriebe (welches sich nunmehr frei mitdreht), sondern direkt über den ersten Freilauf, der eine Kopplung der antreibenden Welle mit der angetriebenen Welle erreicht. Die angetriebene Welle dreht sich bei dem sogenannten Direktantrieb in der gleichen Drehrichtung wie die antreibende Welle.

Die erfindungsgemäße Anordnung ermöglicht folglich mit Hilfe der Freiläufe, dass bei einer ersten Drehrichtung der antreibenden Welle am Getriebeeingang eine direkte Kopplung mit der angetriebenen Welle des Getriebeausgangs erfolgt, während bei einer umgekehrten Drehrichtung die Kopplung über ein Übersetzungsgetriebe mit einer vorgegebenen Übersetzung erfolgen kann. Das Umschalten wird dabei einfach durch eine Drehrichtungsumkehr des Antriebs- bzw. der antreibenden Welle am Getriebeeingang erreicht, so dass kein zusätzlicher mechanischer Schaltmechanismus oder auch kein zusätzliches Element nötig ist, um eine der Komponenten des Übersetzungsgetriebes in einer Drehrichtung der antreibenden Welle relativ zu dem Gehäuse drehfest zu halten, wie dies oftmals bei bekannten Getriebeanordnungen der Fall ist.

Während, wie vorstehend beschrieben, beispielsweise bei üblichen Übersetzungsgetrieben ein separates Schaltelement verschoben werden muss, um ein Festlegen oder Freigeben einzelner Getriebekomponenten zu ermöglichen und damit einen veränderbaren Kraftfluss durch das Getriebe, wird hier der Wechsel zwischen zwei Gangstufen durch bloße Richtungsumkehr der Drehrichtung am Getriebeeingang erreicht. Vorteilhaft tritt bei der vorliegenden Erfindung kein nennenswerter mechanischer Verschleiß ein, wie im Falle eines mechanischen Schaltmechanismus oftmals, wodurch die erfindungsgemäße Getriebeanordnung eine höhere Standzeit hat als übliche Getriebeanordnungen. Weiterhin wird aufgrund der Einfachheit der Bedienung (Richtungsumkehr) auch eine Fehlbedienung durch den Benutzer nahezu ausgeschlossen. Dies hat zur Folge, dass die Getriebeanordnung besonders sicher und zugleich ergonomisch bedienbar ist. Schließlich wird mit Hilfe der erfindungsgemäßen Getriebeanordnung eine gegenüber dem Stand der Technik sehr kompakte Lösung bereitgestellt.

Weiter kann wie vorstehend ausgeführt vorgesehen sein, dass der zweite Freilauf derart innerhalb der Getriebeanordnung angeordnet ist, dass die Drehrichtung der angetriebenen Welle unabhängig von einer Drehrichtungsumkehr an der antreibenden Welle ist. Eine solche Lösung ist besonders vorteilhaft, wenn die Getriebeanordnung beispielsweise in einer Werkzeugmaschine eingesetzt wird, bei der unabhängig von der Drehrichtung des Antriebs am Abtrieb stets dieselbe Drehrichtung gewünscht ist, wie dies beispielsweise bei einer Bohrmaschine oder bei einer Schleifmaschine der Fall sein kann.

Das Planetengetriebe kann als einstufiges Planetengetriebe ausgebildet sein.

Wie bereits vorstehend beschrieben kann die angetriebene Welle somit sowohl von dem Hohlrad als auch von dem Planetenradträger des Planetengetriebes angetrieben werden.

Weiterhin kann vorgesehen sein, dass die Freiläufe im Wesentlichen hülsenförmig ausgebildet sind.

Schließlich betrifft die vorliegende Erfindung auch eine angetriebene Werkzeugmaschine, die eine Getriebeanordnung mit den vorstehend beschriebenen Merkmalen zur Übertragung einer Drehbewegung eines motorisierten Antriebs auf ein an einem Abtrieb anbringbares Werkzeug überträgt.

Die Erfindung wird nachfolgend unter Bezugnahme auf die beigefügten Figuren detaillierter beschrieben, wobei diese ein bevorzugtes Ausführungsbeispiel der Erfindung beispielshaft darstellen, bei dem die einzelnen Merkmale der Erfindung miteinander kombiniert sind. Der Fachmann wird diese jedoch selbstverständlich auch losgelöst voneinander betrachten und/oder zu sinnvollen Kombinationen zusammenfassen können.

Es zeigen schematisch:
- Figur 1: eine schematische Draufsicht auf eine Getriebeanordnung;
- Figur 2: eine längsgeschnittene Darstellung der Getriebeanordnung gemäß Figur 1 in einer ersten Schnittebene II-II;
- Figur 3: eine quergeschnittene Darstellung der Getriebeanordnung gemäß Figur 1 in einer zweiten Schnittebene III-III;
- Figur 4: eine quergeschnittene Darstellung der Getriebeanordnung gemäß Figur 1 in einer dritten Schnittebene IV-IV; und
- Figuren 5a und 5b: schematische Kraftflussverläufe durch die Getriebeanordnung in Abhängigkeit der Drehrichtung an der antreibenden Welle.

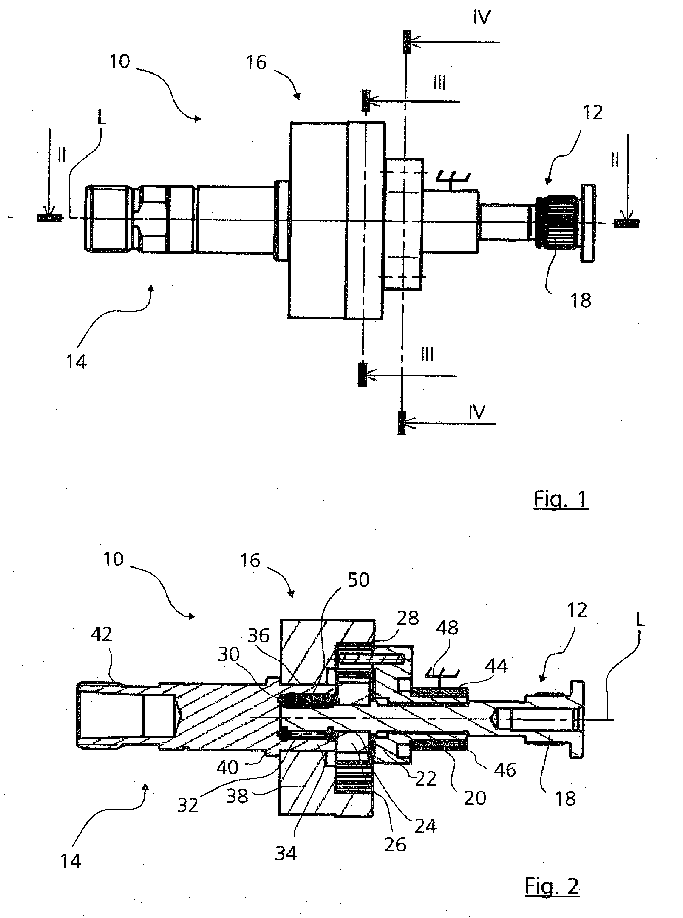

Die Figur 1 zeigt eine erfindungsgemäße Getriebeanordnung, die allgemein mit dem Bezugszeichen 10 bezeichnet ist. Diese Getriebeanordnung umfasst an einem Getriebeeingang eine antreibende Welle 12 sowie an ihrem Getriebeausgang eine angetriebene Welle 14. Die angetriebene Welle 14 sowie die antreibende Welle 12 sind in der gezeigten Ausführungsform konzentrisch zueinander ausgerichtet und erstrecken sich entlang einer Längsachse L, welche zugleich die Drehachse für die Wellen 12, 14 bildet. Zur Übersetzung der Eingangsdrehzahl der antreibenden Welle 12 in eine Ausgangsdrehzahl der angetriebenen Welle 14 ist ferner ein Übersetzungsgetriebe 16 vorgesehen.

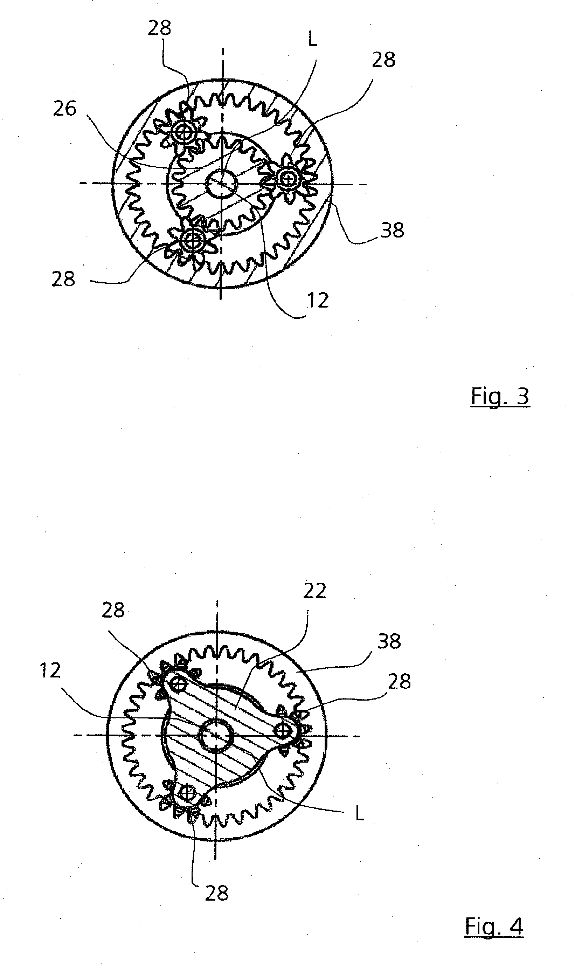

Die Getriebeanordnung der Figur 1 ist nachfolgend detaillierter als längsgeschnittene Ansicht in der Figur 2 (gemäß der Schnittebene II-II in der Figur 1) und als Querschnittsansichten in den Figuren 3 und 4 (gemäß den Schnittebenen III-III und IV-IV der Figur 1) dargestellt.

Wie man in der Figur 2 deutlich erkennen kann, umfasst die antreibende Welle 12 in Richtung der Längsachse L betrachtet mehrere aufeinanderfolgende funktionelle Abschnitte. Der Abschnitt 18 dient dabei zur Übertragung eines Antriebsdrehmoments von einer wie auch immer gearteten Antriebseinheit, beispielsweise einem Elektromotor. Ein zweiter Abschnitt 20 bildet einen Sitz für einen Planetenradträger 22, der drehbar auf der antreibenden Welle 12 gelagert ist. Ein dritter Abschnitt 24 bildet einen Sitz für ein Sonnenrad 26, welches drehfest mit der antreibenden Welle 12 verbunden ist. Ein vierter Abschnitt 30 bildet schließlich einen Sitz für einen ersten Freilauf 32.

Der erste Freilauf 32 ist dabei zwischen dem vierten Abschnitt 30 der antreibenden Welle 12 und einem korrespondierenden Aufnahmeabschnitt 34 der angetriebenen Welle 14 angeordnet. Durch den Freilauf 32 wird sichergestellt, dass die antreibende Welle 12 in einer ersten Drehrichtung ihre Drehbewegung über den ersten Freilauf 32 unmittelbar auf die angetriebene Welle 14 überträgt, während sie in einer hierzu umgekehrten Richtung relativ zu der angetriebenen Welle 14 verdrehbar ist. Dies wird dadurch erreicht, dass der Freilauf 32 in einer ersten Drehrichtung eine Sperrfunktion hat, während er in einer hierzu entgegengesetzten Drehrichtung eine Drehbewegung zulässt.

Im Bereich des Aufnahmeabschnitts 34 der angetriebenen Welle 14 ist ferner auch ein Sitz 36 für ein Hohlrad 38 der Getriebeanordnung 10 an dem Außenumfang der angetriebenen Welle 14 ausgebildet. Der Sitz 36 kann dabei, wie in der Figur 2 gezeigt, einseitig durch eine Schulter 40 begrenzt sein. Die angetriebene Welle 14 weist des Weiteren einen Abtriebsabschnitt 42 auf, an dem das Drehmoment der angetriebenen Welle 14 abgenommen werden kann. Grundsätzlich ist es denkbar, dass der Abtriebsabschnitt 42 an der Außenumfangsfläche und/oder der Innenumfangsfläche einer entsprechenden Ausnehmung 50 spezielle Geometrien, wie beispielsweise Nuten, Abflachungen oder Freistiche aufweist, die die Kopplung eines entsprechenden Werkzeugträgers erleichtern. Beispielsweise kann der Abtriebsabschnitt 42 zur Befestigung einer sogenannten Spannzange ausgebildet sein, wie in den Figuren 1 und 2 ersichtlich.

Wie in den Figuren 1 und 2 ebenfalls gezeigt ist, weist die Getriebeanordnung 10 neben dem ersten Freilauf 32 auch einen zweiten Freilauf 46 auf, welcher an einer korrespondierenden Sitzfläche 44 des Planetenradträgers 22 angeordnet ist. Der zweite Freilauf 46 stützt sich ferner an seiner Außenumfangsfläche an einem durch das Bezugszeichen 48 angedeuteten Gehäuseabschnitt der Getriebeanordnung 10 drehfest ab. Durch den zweiten Freilauf 46 wird eine Drehbewegung des Planetenradträgers in eine erste Drehrichtung freigegeben, während sie in einer zweiten hierzu entgegengesetzten Drehrichtung gesperrt wird.

Die einzelnen Komponenten des als Planetengetriebe ausgebildeten Übersetzungsgetriebes 16 sind ferner auch in den Figuren 3 und 4 zum besseren Verständnis des Fachmanns gezeigt.

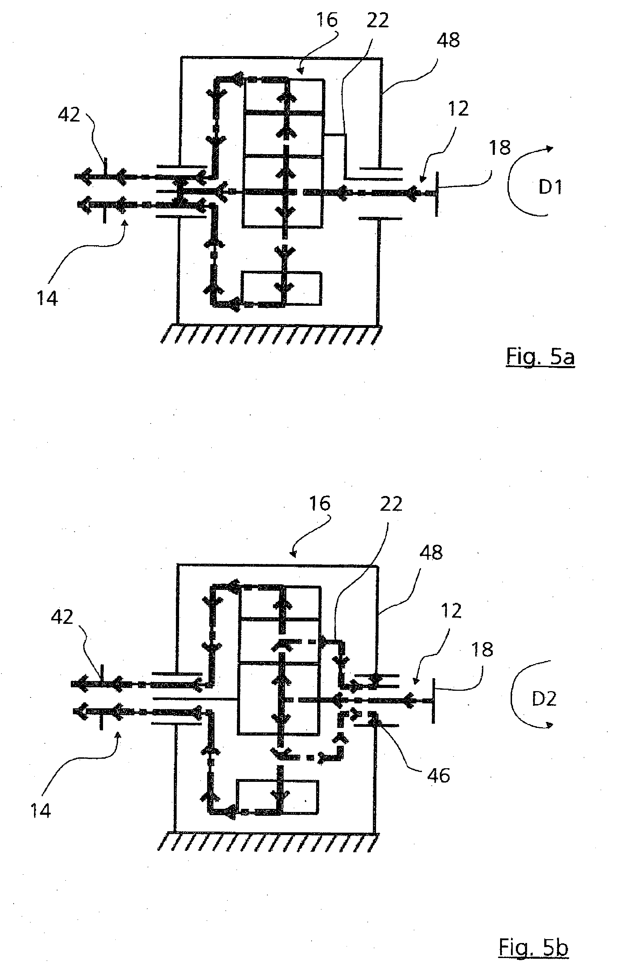

Nachfolgend wird die Funktionsweise der Getriebeanordnung 10 unter Bezugnahme auf die Figuren 5a und 5b näher erläutert. Die Figur 5a zeigt eine erste Betriebsart der Getriebeanordnung 10, bei der über den Antriebsabschnitt 18 eine Drehbewegung in einer ersten Drehrichtung D1 auf die antreibende Welle 12 übertragen wird. Der erste Freilauf 32 ist derart ausgebildet, dass er in Richtung dieser Drehbewegung D1 sperrt und auf diese Weise eine direkte Kopplung der antreibenden Welle 12 mit der angetriebenen Welle 14 erreicht. Die angetriebene Welle 14 wird über den sperrenden Freilauf 32 von der antreibenden Welle 12 mitgenommen und dreht sich in der gleichen Drehrichtung D1 mit der antreibenden Welle 12 mit. Diese Betriebsstellung stellt eine sogenannte Direktkopplung bzw. Direktantrieb der angetriebenen Welle 14 mit bzw. von der antreibenden Welle 12 dar. Der zweite Freilauf 46 ist dabei so ausgebildet, dass er in der ersten Drehrichtung D1 die Drehbewegung freigibt, d. h. der Planetenradträger 22 kann sich zusammen mit den daran angeordneten Planetenrädern 28 (vgl. Figuren 2 bis 4) sowie dem Hohlrad 38 frei mit dem Sonnenrad 26 des Planetengetriebes 16 mitdrehen. Somit erfolgt bei dieser Betriebsstellung keine Drehmomentübertragung über das Übersetzungsgetriebe 16; dieses dreht sich stattdessen einfach frei mit der antreibenden Welle 12 mit.

In der Figur 5b ist eine zweite Betriebsart gezeigt, bei der die Drehrichtung der Drehbewegung an der antreibenden Welle 12 umgekehrt ist (Drehrichtung D2). Bei einer zu der ersten Drehrichtung D1 entgegengesetzten Drehrichtung D2 sperrt der zweite Freilauf 46, während der erste Freilauf 32 eine relative Drehbewegung der antreibenden Welle 12 gegenüber der angetriebenen Welle 14 erlaubt. Die Direktkopplung der antreibenden Welle 12 mit der angetriebenen Welle 14 besteht somit in der zweiten Betriebsart gemäß der Figur 5b nicht mehr. Stattdessen stützt sich durch die Sperrwirkung des zweiten Freilaufs 46 der Planetenradträger 22 drehfest an dem Gehäuse 48 ab, so dass eine Drehbewegung des Sonnenrads 26 der antreibenden Welle 12 über die Planetenräder 28 auf das damit in Eingriff befindliche Hohlrad 38 übertragen wird, welches drehfest mit der angetriebenen Welle 14 verbunden ist und diese somit drehend mitnimmt.

Durch die Drehmomentübertragung von dem Sonnenrad 26 über die Planetenräder 28 auf das Hohlrad 38 findet eine doppelte Drehrichtungsumkehr statt, so dass das Hohlrad 38 und die angetriebene Welle 14 sich in der gleichen Drehrichtung D2 bewegen, wie die antreibende Welle 12. Durch die Übertragung der Drehbewegung über das als Planetengetriebe ausgebildete Übersetzungsgetriebe 16 wird zudem eine Übersetzung einer Eingangsdrehzahl an der antreibenden Welle 12 in eine Ausgangsdrehzahl der angetriebenen Welle 14 in Abhängigkeit von dem vorgegebenen Übersetzungsverhältnis des Übersetzungsgetriebes 16 erreicht.

Zusammenfassend kann mit der vorliegenden Getriebeanordnung eine Drehrichtungsumkehr auf einfache Weise zum Wechsel einer Über- bzw. Untersetzung der Getriebeanordnung genutzt werden, ohne dass ein mechanischer Schaltmechanismus benötig wird. Somit können die bekannten Nachteile eines solchen mechanischen Schaltmechanismus umgangen werden, wie beispielsweise ein mechanischer Verschleiß oder eine Fehlbedienung der Getriebeanordnung. Weiterhin kann durch die Ausbildung des Übersetzungsgetriebes als Planetengetriebe eine sehr kompakte Bauweise bereitgestellt werden.

## Patentansprüche

1. Getriebeanordnung (10) zur Übertragung einer Drehbewegung von einem Antrieb auf einen Abtrieb, die zumindest teilweise innerhalb eines Gehäuses (48) aufgenommen ist und umfasst:
eine antreibende Welle (12) an einem Getriebeeingang,
eine angetriebene Welle (14) an einem Getriebeausgang, und ein Übersetzungsgetriebe (16) zur Übersetzung einer Eingangsdrehzahl der antreibenden Welle (12) in eine Ausgangsdrehzahl der angetriebenen Welle (14), das ein Planetengetriebe mit einem Holhrad (38), einem Sonnenrad (26) sowie einem Planetenradträger (22) umfasst, an dem eine Anzahl von Planetenrädern (28) angeordnet sind, die in Eingriff mit dem Sonnenrad (26) und dem Hohlrad (38) stehen,
wobei zum Umschalten zwischen wenigstens zwei Übersetzungsstufen der Getriebeanordnung ferner zwei Freiläufe (32, 46) vorgesehen sind, deren Sperrrichtungen sich bezüglich den Drehrichtungen (D1, D2) der antreibenden Welle (12) umgekehrt verhalten, so dass durch eine Drehrichtungsumkehr der Drehrichtung (D1, D2) der antreibenden Welle (12) das Umschalten zwischen wenigstens zwei Übersetzungsstufen erreicht wird,
wobei der erste (32) der zwei Freiläufe (32, 46) zwischen der antreibenden Welle (12) und der angetriebenen Welle (14) angeordnet ist,
**dadurch gekennzeichnet, dass** der zweite Freilauf (46) zwischen dem Gehäuse (48) und dem Hohlrad (38) des Planetengetriebes angeordnet ist und in einer ersten Drehrichtung das Hohlrad freigibt, so dass sich dieses frei mit der Antriebswelle mitdrehen kann ohne ein Drehmoment zu übertragen, während er in einer zweiten Drehrichtung das Hohlrad gehäusefest hält, wodurch eine Drehmomentübertragung über das Hohlrad erfolgen kann.

2. Getriebeanordnung (10) zur Übertragung einer Drehbewegung von einem Antrieb auf einen Abtrieb, die zumindest teilweise innerhalb eines Gehäuses (48) aufgenommen ist und umfasst:
eine antreibende Welle (12) an einem Getriebeeingang,
eine angetriebene Welle (14) an einem Getriebeausgang, und ein Übersetzungsgetriebe (16) zur Übersetzung einer Eingangsdrehzahl der antreibenden Welle (12) in eine Ausgangsdrehzahl der angetriebenen Welle (14), das ein Planetengetriebe mit einem Holhrad (38), einem Sonnenrad (26) sowie einem Planetenradträger (22) umfasst, an dem eine Anzahl von Planetenrädern (28) angeordnet sind, die in Eingriff mit dem Sonnenrad (26) und dem Hohlrad (38) stehen,
wobei zum Umschalten zwischen wenigstens zwei Übersetzungsstufen der Getriebeanordnung ferner zwei Freiläufe (32, 46) vorgesehen sind, deren Sperrrichtungen sich bezüglich den Drehrichtungen (D1, D2) der antreibenden Welle (12) umgekehrt verhalten, so dass durch eine Drehrichtungsumkehr der Drehrichtung (D1, D2) der antreibenden Welle (12) das Umschalten zwischen wenigstens zwei Übersetzungsstufen erreicht wird,
wobei der erste (32) der zwei Freiläufe (32, 46) zwischen der antreibenden Welle (12) und der angetriebenen Welle (14) angeordnet ist,
**dadurch gekennzeichnet, dass** der zweite Freilauf (46) zwischen dem Gehäuse (48) und dem Planetenradträger (22) des Planetengetriebes angeordnet ist und in einer ersten Drehrichtung den Planetenträger freigibt, so dass sich dieser frei mit der Antriebswelle mitdrehen kann ohne ein Drehmoment zu übertragen, während er in einer zweiten Drehrichtung den Planetenträger gehäusefest hält, wodurch eine Drehmomentübertragung über den Planetenträger erfolgen kann.

3. Getriebeanordnung (10) nach Anspruch 1 oder 2,
**dadurch gekennzeichnet, dass** der zweite Freilauf (46) derart innerhalb der Getriebeanordnung (10) angeordnet ist, dass die Drehrichtung der angetriebenen Welle (14) unabhängig von einer Drehrichtungsumkehr an der antreibenden Welle (12) ist.

4. Getriebeanordnung (10) nach einem der vorhergehenden Ansprüche,
**dadurch gekennzeichnet, dass** das Planetengetriebe einstufig ausgebildet ist.

5. Getriebeanordnung (10) nach einem der vorhergehenden Ansprüche,
**dadurch gekennzeichnet, dass** die angetriebene Welle (14) von dem Hohlrad (38) oder dem Planetenradträger (22) des Planetengetriebes angetrieben werden kann.

6. Getriebeanordnung (10) nach einem der Ansprüche 1 bis 5,
**dadurch gekennzeichnet, dass** die Freiläufe (32, 46) im Wesentlichen hülsenförmig ausgebildet sind.

7. Angetriebene Werkzeugmaschine umfassend eine Getriebeanordnung (10) nach einem der Ansprüche 1 bis 6 zur Übertragung einer Drehbewegung eines motorischen Antriebs auf ein an einem Abtrieb anbringbares Werkzeug.

## Claims

1. Gear system (10) for the transmission of a rotary movement from a drive system to a drive output, which is accommodated at least partially inside a casing (48) and which comprises:
a driving shaft (12) on a gear system input, a driven shaft (14) on a gear system output and a step-up gear (16) for the conversion of an input speed from the driving shaft (12) into an output speed of the driven shaft (14) that comprises a planetary gear system with a ring gear (38), a sun wheel (26) and also a planet carrier (22), on which a number of planet wheels (28) are arranged, which engage with the sun wheel (26) and the ring gear (38), whereby in order to switch between at least two conversion steps of the gear system two freewheels (32, 46) are provided, the locking directions of which function counter to the directions of rotation (D1, D2) of the driving shaft (12), so that by reversing the direction of rotation (D1, D2) of the driving shaft (12), a switching operation is achieved between at least two switching steps,
whereby the first (32) of the freewheels (32, 46) is arranged between the driving shaft (12) and the driven shaft (14),
**characterised in that** the second freewheel (46) is arranged between the housing (48) and the ring gear (38) of the planetary system and releases the ring gear in a first direction of rotation so that this latter can rotate freely with the drive shaft without any torque being transmitted, while in a second direction of rotation the ring gear is held securely in its housing, as a result of which torque can be transmitted through the ring gear.

2. Gear system (10) for the transmission of a rotary movement from a drive system to a drive output, which is accommodated at least partially inside a casing (48) and which comprises:
a driving shaft (12) on a gear system input, a driven shaft (14) on a gear system output and a step-up gear (16) for the conversion of an input speed from the driving shaft (12) into an output speed of the driven shaft (14) that comprises a planetary gear system with a ring gear (38) a sun wheel (26) and also a planet carrier (22), on which a number of planet wheels (28) are arranged, which engage with the sun wheel (26) and the ring gear (38),
whereby in order to switch between at least two conversion steps of the gear system two freewheels (32, 46) are provided, the locking directions of which function counter to the directions of rotation (D1, D2) of the driving shaft (12), so that reversing the direction of rotation (D1, D2) of the driving shaft (12), a switching operation is achieved between at least two switching steps,
whereby the first (32) of the free wheels (32, 46) is arranged between the driving shaft (12) and the driven shaft (14),
**characterised in that** the second freewheel (46) is located between the housing (48) and the planet carrier (22) and releases the planet carrier in a first direction of rotation, so that this can rotate freely with the drive shaft without any torque being transmitted, while in a second direction of rotation the planet carrier is securely held in its housing, as a result of which torque can be transmitted through the planet carrier.

3. Gear system (10) according to claims 1 or 2,
**characterised in that** the second freewheel (46) is arranged inside the gear system (10) in such way that the direction of rotation of the driven shaft (14) is independent of a change in the direction of rotation of the driving shaft (12).

4. Gear system (10) according to any of the above claims,
**characterised in that** the planetary gear system is constructed as a single stage.

5. Gear system (10) according to any of the above claims,
**characterised in that** the driven shaft (14) can be driven by the ring gear (38) or the planet carrier (22) of the planetary gear system.

6. Gear system (10) according to any of claims 1 to 5,
**characterised in that** the freewheels (32, 46) are essentially sleeve shaped.

7. Powered machine tool machine comprising a gear system (10) according to any of claims 1 to 6 for the transmission of a rotary movement to a machine tool to be mounted on a drive output.

## Revendications

1. Dispositif d'entraînement (10) pour la transmission d'un mouvement de rotation d'un élément d'entraînement vers un élément entraîné, ces éléments étant au moins partiellement logés dans un boîtier (48), et comprenant :
un arbre entraînant (12) disposé à une entrée d'engrenage,
un arbre entraîné (14) disposé à une sortie d'engrenage, et un engrenage de démultiplication (16) pour la transmission d'une vitesse de rotation de l'arbre d'entrée entraînant (12) en une vitesse de rotation de l'arbre de sortie entraîné (14), qui comprend un engrenage planétaire avec un pignon creux (38), une roue solaire (26) ainsi qu'un support de roues planétaires (22), portant une pluralité de roues planétaires (28), qui sont en prise avec la roue solaire (26) et
le pignon creux (38), dans lequel pour passer les vitesses entre au moins deux rapports de transmission du dispositif d'entraînement, il est par ailleurs prévu deux roues libres (32, 46), dont les directions de verrouillage se définissent en fonction des sens de rotation (D1, D2) de l'arbre entraînant (12), dans le sens opposé, de sorte que lors d'une inversion du sens de rotation des sens de rotation (D1, D2) de l'arbre entraînant (12), on obtient le changement de vitesse entre au moins deux rapports de transmission,
dans lequel la première (32) des deux roues libres (32, 46) est montée entre l'arbre entraînant (12) et l'arbre entraîné (14),
**caractérisé en ce que**, la seconde roue libre (46) est montée entre le boîtier (48) et le pignon creux (38) de l'engrenage planétaire et libère le pignon creux dans un premier sens de rotation, de sorte que ce dernier puisse tourner librement avec l'arbre entraînant sans transmettre un couple, tandis que le pignon creux est maintenu fixe par rapport au boîtier dans un second sens de rotation, de sorte qu'un couple puisse être transmis par le pignon creux.

2. Dispositif d'entraînement (10) pour la transmission d'un mouvement de rotation d'un élément d'entraînement vers un élément entraîné, ces éléments étant au moins partiellement logés dans un boîtier (48), et comprenant :
un arbre entraînant (12) disposé à une entrée d'engrenage,
un arbre entraîné (14) disposé à une sortie d'engrenage, et un engrenage de démultiplication (16) pour la transmission d'une vitesse de rotation de l'arbre d'entrée entraînant (12) en une vitesse de rotation de l'arbre de sortie entraîné (14), qui comprend un engrenage planétaire avec un pignon creux (38), une roue solaire (26) ainsi qu'un support de roues planétaires (22), portant une pluralité de roues planétaires (28), qui sont en prise avec la roue solaire (26) et le pignon creux (38), dans lequel pour passer les vitesses entre au moins deux rapports de transmission du dispositif d'entraînement, il est par ailleurs prévu deux roues libres (32, 46), dont les directions de verrouillage se comportent en fonction des sens de rotation (D1, D2) de l'arbre entraînant (12) dans le sens opposé, de sorte que lors d'une inversion du sens de rotation des sens de rotation (D1, D2) de l'arbre entraînant (12), on obtient le changement de vitesse entre au moins deux rapports de transmission,
dans lequel la première (32) des deux roues libres (32, 46) est montée entre l'arbre entraînant (12) et l'arbre entraîné (14),
**caractérisé en ce que**, la seconde roue libre (46) est montée entre le boîtier (48) et le support de roues planétaires (22) de l'engrenage planétaire et libère l'engrenage planétaire dans un premier sens de rotation, de sorte que ce dernier puisse tourner librement avec l'arbre entraînant sans transmettre un couple, tandis que le support de roues planétaires est maintenu fixe par rapport au boîtier dans un second sens de rotation, de sorte qu'un couple puisse être transmis par le support de roues planétaires.

3. Dispositif d'entraînement (10) selon les revendications 1 ou 2, **caractérisé en ce que**, la seconde roue libre (46) est montée de telle manière à l'intérieur du dispositif d'entraînement (10), que le sens de rotation de l'arbre entraîné (14) est indépendant d'une inversion du sens de rotation survenant sur l'arbre entraînant (12).

4. Dispositif d'entraînement (10) selon l'une des revendications précédentes,
**caractérisé en ce que**, l'engrenage planétaire est configuré comme un entraînement à un étage.

5. Dispositif d'entraînement (10) selon l'une des revendications précédentes,
**caractérisé en ce que**, l'arbre entraîné (14) peut être entraîné par le pignon creux (38) ou le support de roues planétaires (22) de l'engrenage planétaire.

6. Dispositif d'entraînement (10) selon l'une des revendications 1 à 5,
**caractérisé en ce que**, les roues libres (32, 46) sont configurées sensiblement en forme de manchon.

7. Machine outil comportant un dispositif d'entraînement (10) selon l'une des revendications 1 à 6, pour la transmission d'un mouvement de rotation d'un moteur d'entraînement sur un entraînement adaptable d'un outil.
